# EUROPÄISCHE PATENTSCHRIFT

(11) **EP 3 196 799 B1**
(45) Veröffentlichungstag und Bekanntmachung des Hinweises auf die Patenterteilung: **13.06.2018**
(21) Anmeldenummer: 16152558.9
(22) Anmeldetag: 25.01.2016
(51) Int. Cl.: G06K 7/00

(54) **MANIPULATIONSSICHERER KARTENLESER MIT EINER EINE HINTERSPRITZTE DOPPELLAGIGE LEITERBAHNFOLIE AUFWEISENDEN ABDECKHAUBE**
TAMPER-PROOF CARD READER WITH A COVER COMPRISING A REAR INJECTED DOUBLE LAYER TRACK FILM
LECTEUR DE CARTE PROTEGE CONTRE LA MANIPULATION DOTE D'UN COUVERCLE PRESENTANT UN CIRCUIT IMPRIME DOUBLE-COUCHE MOULE

(43) Veröffentlichungstag der Anmeldung: 26.07.2017
(73) Patentinhaber: ddm hopt + schuler GmbH & Co. KG., 78628 Rottweil (DE)
(72) Erfinder: Hopt, Karl-Rudolf, 78628 Rottweil (DE)
(74) Vertreter: Kohler Schmid Möbus Patentanwälte

(56) Entgegenhaltungen:
- EP-A1- 1 785 911
- EP-A1- 1 927 931
- EP-A1- 2 950 234

## Beschreibung

Die vorliegende Erfindung betrifft einen Kartenleser zum Datenaustausch mit einer Chipkarte, aufweisend ein Kartenlesergehäuse mit einer Karteneinführöffnung, eine im Kartenlesergehäuse angeordnete Kontaktiereinheit zum Datenaustausch mit einer durch die Karteneinführöffnung in das Kartenlesergehäuse eingeführten Chipkarte und eine die Kontaktiereinheit bis auf die Karteneinführöffnung abdeckende Haube aus Kunststoff.

Ein derartiger Kartenleser ist beispielsweise durch die DE 10 2009 026 466 B3 bekannt geworden.

Dieser bekannte Kartenleser weist ein Kunststoffspritzteil in Form einer Bohrschutzhaube mit einer daran vorgesehenen Bohrschutz-Leiterbahnstruktur auf. Die Bohrschutzhaube ist ein spritzgegossenes Kunststoffteil, dessen Innenseite eine metallisierte Mäander-Leiterbahnstruktur als Bohrschutz aufweist. Dazu wurde auf die Innenseite vollflächig bzw. flächendeckend mit einem Laser eine Mäanderbahnstruktur (ca. 0,15 mm Bahnbreite) im Abstand von ca. 0,25 mm abgetragen. Nach dieser Laserstrukturierung wurde das Kunststoffteil metallisiert. Durch die nun metallisierte Bohrschutz-Leiterbahnstruktur ist auf der gesamten Innenseite zwischen zwei Anschlusskontakten eine durchgehende elektrische Leiterbahn gelegt. Wenn die Bohrschutzhaube zu Manipulationszwecken durchbohrt oder abgeschliffen wird, wird dabei auch die durchgehende Leiterbahn durchtrennt, über die im Betrieb ein Strom fließt. Dies wird von einer Überwachungseinheit erkannt, die dann keinen Lesevorgang mehr zulässt bzw. den Kartenleser außer Funktion setzt. Ferner ist ein Kartenleser mit den Merkmalen des Oberbegriffs des Anspruchs 1 in der EP 1 927 931 A1 offenbart. Es ist demgegenüber die Aufgabe der vorliegenden Erfindung, einen Kartenleser der eingangs genannten Art noch manipulationssicherer zu machen.

Diese Aufgabe wird erfindungsgemäß dadurch gelöst, dass die Haube innenseitig mit einer mindestens zweilagigen Leiterbahnfolie hinterspritzt ist, dass die der Haube zugewandte, erste Lage eine flächendeckende Bohrschutz-Leiterbahnstruktur mit mindestens einer durchgehenden Bohrschutz-Leiterbahn und die der Haube abgewandte, zweite Lage eine Abhebeschutz-Leiterbahnstruktur mit mindestens einer Abhebeschutz-Leiterbahn aufweist, dass die mindestens eine Bohrschutz-Leiterbahn über Durchkontaktierungen der Leiterbahnfolie auf die zweite Lage geführt ist und in elektrischen Anschlusskontakten der zweiten Lage endet und dass die mindestens eine Abhebeschutz-Leiterbahn in elektrischen Anschlusskontakten der zweiten Lage endet.

Erfindungsgemäß ist die Leiterbahnfolie mit dem Kunststoffmaterial der Haube stoffschlüssig verbunden bzw. verschmolzen. Wenn zu Manipulationszwecken die Haube durchbohrt oder vom Kartenlesergehäuse abgehoben wird, wird dadurch zwangsläufig die bis dahin geschlossene Bohrschutz-Leiterbahnstruktur bzw. die bis dahin geschlossene Abhebeschutz-Leiterbahnstruktur unterbrochen. Diese Stromkreisunterbrechung wird von einer Überwachungseinheit erkannt, die dann keinen Lesevorgang mehr zulässt bzw. die Kontaktiereinheit außer Funktion setzt.

Statt doppellagig kann die Leiterbahnfolie auch dreilagig oder noch höherlagig mit weiteren Bohrschutz- und Abhebeschutz-Leiterbahnstrukturen ausgebildet sein, wobei die der Haube zugewandte, erste Lage stets durch die flächendeckende Bohrschutz-Leiterbahnstruktur gebildet ist.

Besonders vorteilhaft sind die Durchkontaktierungen der Leiterbahnfolie in einer nicht-hinterspritzten Folienlasche der Leiterbahnfolie angeordnet, so dass die Durchkontaktierungen von der hinterspritzten Haube umgeben und folglich vor Manipulationen geschützt sind.

Je dünner die Linienstärke der Leiterbahnen und je geringer der Linienabstand zwischen den Leiterbahnen der Bohrschutz-Leiterbahnstruktur, desto besser ist der Manipulationsschutz. Vorzugsweise weist die mindestens eine Bohrschutz-Leiterbahn eine Linienbreite von höchstens 0,2 mm, insbesondere höchstens 0,15 mm, und einen Linienabstand von höchstens 0,3 mm, insbesondere höchstens 0,2 mm, auf.

Besonders bevorzugt weist die mindestens eine Abhebeschutz-Leiterbahn mehrere nicht miteinander verbundene Leiterbahnabschnitte und mindestens einen Abhebeschalter auf, welcher zwei benachbarte, freiliegende elektrische Kontaktflächen aufweist, in denen jeweils zwei Leiterbahnabschnitte enden. Die benachbarten Kontaktflächen sind beispielsweise durch ein Deckelblech aus zumindest abschnittweise elektrisch leitendem Material oder durch eine Leiterplatte, auf der der Kartenleser samt Haube montiert ist, miteinander elektrisch verbunden. Wenn zu Manipulationszwecken die Haube vom Deckelblech oder von der Leiterplatte abgehoben wird, wird dadurch zwangsläufig die bis dahin geschlossene Abhebeschutz-Leiterbahnstruktur unterbrochen. Die mindestens eine Abhebeschutz-Leiterbahn kann einen oder mehrere in Reihe geschaltete Abhebeschalter aufweisen. Weiterhin vorteilhaft ist das Deckelblech zwischen Kartenlesergehäuse und Haube angeordnet und am Kartenlesergehäuse befestigt.

Vorzugsweise weist das Deckelblech mehrere federnde Laschen auf, welche sich an der Innenseite der Haube abstützen und die freiliegenden elektrischen Kontaktflächen des mindestens einen Abhebeschalters miteinander elektrisch verbinden. Die Laschen sind entweder aus elektrisch leitendem Material und gegeneinander isoliert oder weisen jeweils gegeneinander isolierte elektrische Kontaktstrecken auf, die die Kontaktflächen des mindestens einen Abhebeschalters miteinander elektrisch verbinden.

Die Anschlusskontakte sind bevorzugt an der Unterseite der Haube, insbesondere als freiliegende elektrische Kontaktflächen der Leiterbahnen, angeordnet, um von Gegenkontakten einer Leiterplatte kontaktiert zu werden.

Die mindestens eine Bohrschutz-Leiterbahn und die mindestens eine Abhebeschutz-Leiterbahn sind entweder in Reihe geschaltet, um einen gemeinsamen Stromkreis zu bilden, oder bilden jeweils voneinander separate Stromkreise.

Besonders bevorzugt ist der Kartenleser auf einer Leiterplatte montiert, wobei die Anschlusskontakte der Haube von entsprechenden Gegenkontakten der Leiterplatte elektrisch kontaktiert sind.

Weitere Vorteile der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigen:
- Fig. 1: eine perspektivische Ansicht der Unterseite des erfindungsgemäßen Kartenlesers;
- Fig. 2: eine Draufsicht auf die offene Unterseite einer in Fig. 1 gezeigten Haube, die innenseitig mit einer zweilagigen Leiterbahnfolie hinterspritzt ist;
- Fign. 3a, 3b: die Leiterbahnfolie von Fig. 2 als ebener Folienzuschnitt (Fig. 3a) und im aufgerichteten Zustand (Fig. 3b);
- Fig. 4: schematisch den Querschnitt der Leiterbahnfolie;
- Fig. 5: eine perspektivische Ansicht eines in Fig. 1 nur teilweise sichtbaren Deckelblechs;
- Fig. 6: eine Detailansicht des Kartenlesers entsprechend VI in Fig. 1; und
- Fig. 7: eine Schnittansicht des auf eine Leiterplatte montierten Kartenlesers.

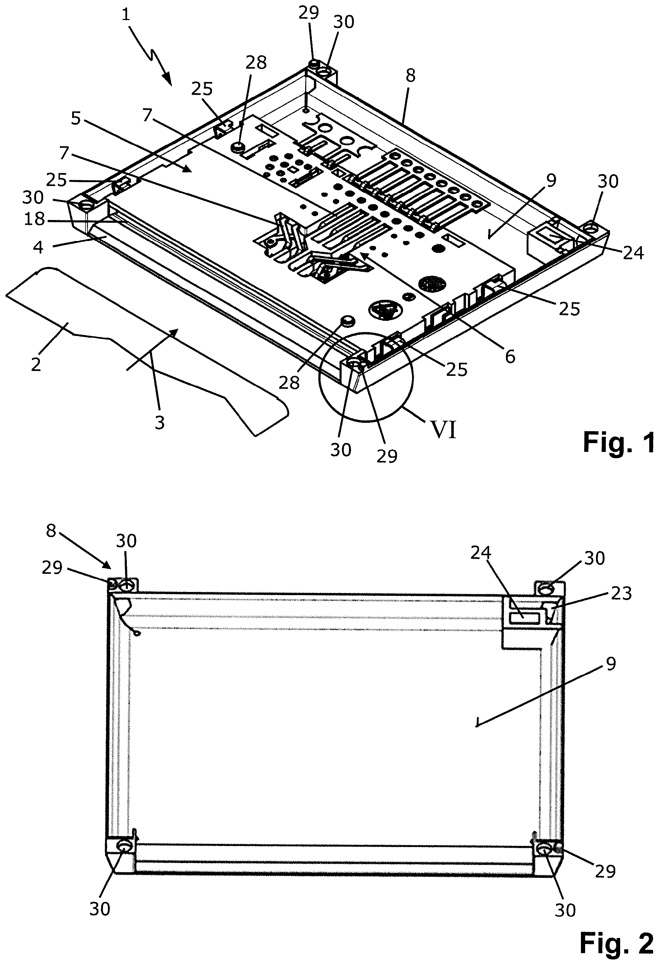

Der in **Fig. 1** gezeigte Kartenleser **1** ist ein so genannter Push/Pull-Kartenleser, bei dem eine Chipkarte **2** durch den Benutzer in Einführrichtung **3** über eine Karteneinführöffnung **4** in ein Kartenlesergehäuse **5** bis in die Datenaustauschposition eingeführt und nach dem Datenaustausch vom Benutzer wieder aus dem Kartenleser 1 herausgezogen wird. Die Chipkarte 2 trägt zum Speichern der Daten einen Mikrochip (nicht gezeigt), dessen Kontakte als elektrische Kontaktfelder (nicht gezeigt) auf der Kartenoberfläche vorgesehen sind. Im Kartenlesergehäuse 5 ist eine Kontaktiereinheit **6** zum Datenaustausch mit der durch die Karteneinführöffnung 4 in das Kartenlesergehäuse 5 eingeführten Chipkarte 2 angeordnet. Die Kontaktiereinheit 6 weist mehrere elastisch verformbare Kontaktfedern **7** auf, die mit ihren freien Kontaktenden in die Kartenbahn hineinragen. Durch die eingeführte Chipkarte 2 werden die freien Kontaktenden der Kontaktfedern 7 aus der Kartenbahn ausgelenkt und kontaktieren die elektrischen Kontaktfelder der Chipkarte 2.

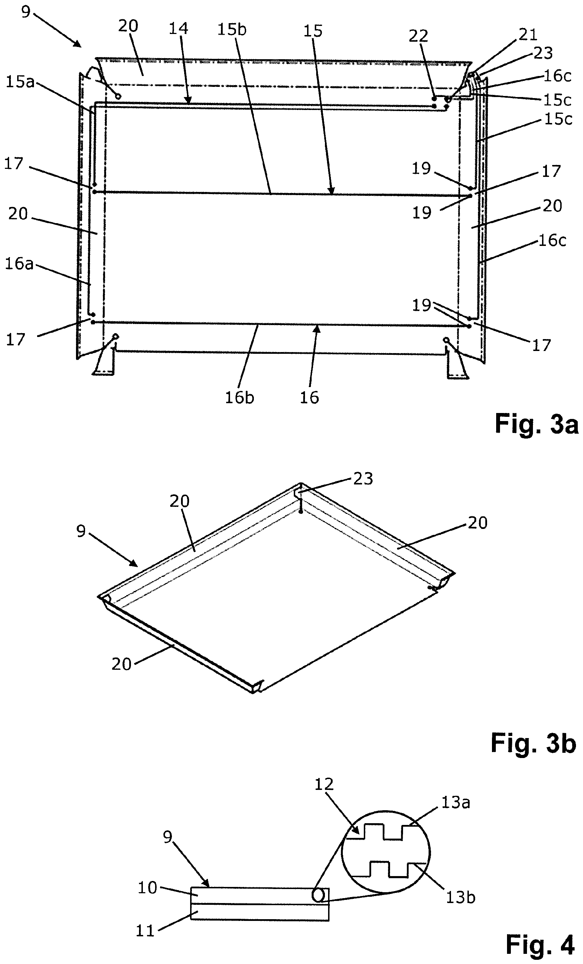

Das Kartenlesergehäuse 5 ist von einer Haube **8** (**Fig. 2**) aus Kunststoff abgedeckt, deren Innenseite vollständig mit einer Leiterbahnfolie **9** hinterspritzt ist. Die Leiterbahnfolie 9 ist in **Fig. 3a** als ebener Folienzuschnitt und in **Fig. 3b** im aufgerichteten Zustand gezeigt.

Wie in **Fig. 4** gezeigt, ist die Leiterbahnfolie 9 als flexible zweilagige Leiterbahnfolie ausgebildet, deren der Haube 8 zugewandte, erste Lage mit **10** und deren der Haube 8 abgewandte, zweite Lage mit **11** bezeichnet ist. Die erste Lage 10 weist flächendeckend eine Bohrschutz-Leiterbahnstruktur **12** in Form von zwei durchgehenden mäanderförmigen Bohrschutz-Leiterbahnen **13a, 13b** auf, deren Linienbreite höchstens 0,2 mm und deren Linienabstand zueinander höchstens 0,3 mm beträgt.

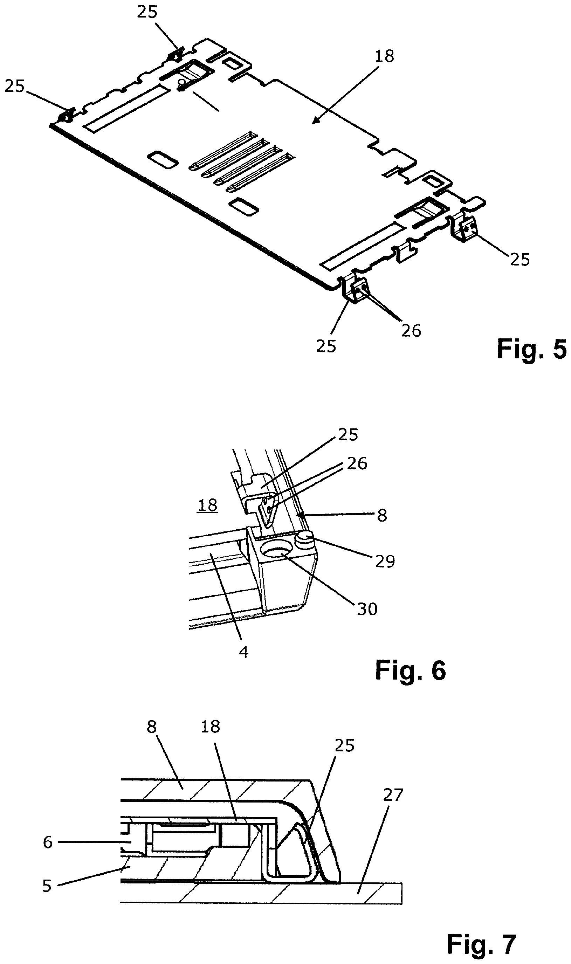

Wie in Fig. 3a gezeigt, weist die zweite Lage 11 eine Abhebeschutz-Leiterbahnstruktur **14** in Form von zwei Abhebeschutz-Leiterbahnen **15**, **16** mit jeweils zwei in Reihe geschalteten Abhebeschaltern **17** auf. Die Abhebeschutz-Leiterbahnen 15, 16 sind jeweils durch drei nicht miteinander verbundene Leiterbahnabschnitte **15a-15c, 16a-16c** gebildet, die zusammen mit einem Deckelblech **18** (Fig. 5) jeweils die Abhebeschalter 17 ausbilden. Jeder Abhebeschalter 17 ist durch zwei benachbarte, freiliegende elektrische Kontaktflächen **19**, in denen jeweils zwei Leiterbahnabschnitte der zugehörigen Abhebeschutz-Leiterbahn 15, 16 enden, sowie durch das Deckelblech 18 gebildet, das die beiden elektrischen Kontaktflächen 19 miteinander elektrisch verbindet, wie unten noch näher beschrieben ist.

Wie in Fign. 3a und 3b gezeigt, überlappen die Seitenränder der drei aufgerichteten Seitenwände **20** der Leiterbahnfolie 9 miteinander, so dass die aufgerichtete Leiterbahnfolie 9 außenseitig eine lückenlose Bohrschutz-Leiterbahnstruktur 12 aufweist. Diese aufgerichtete Leiterbahnfolie 9 wird dann in das Spritzwerkzeug der Haube 8 eingelegt, und beim anschließenden In-Mold-Spritzgießvorgang wird die Haube 8 innenseitig mit der Leiterbahnfolie 9 hinterspritzt, wie in Fig. 2 gezeigt ist.

Im gezeigten Ausführungsbeispiel sind die eine, erste Bohrschutz-Leiterbahn 13a und die eine, erste Abhebeschutz-Leiterbahn 15 über Durchkontaktierungen **21** der Leiterbahnfolie 9 miteinander in Reihe geschaltet, wobei die beiden Enden dieser ersten Leiterbahn-Reihenschaltung durch elektrische Anschlusskontakte **22** der zweiten Lage 11 gebildet sind. Die andere, zweite Bohrschutz-Leiterbahn 13b und die andere, zweite Abhebeschutz-Leiterbahn 16 sind ebenfalls über die Durchkontaktierungen 21 der Leiterbahnfolie 9 miteinander in Reihe geschaltet, wobei die beiden Enden dieser zweiten Leiterbahn-Reihenschaltung ebenfalls durch elektrische Anschlusskontakte 22 der zweiten Lage 11 gebildet sind. Wie in Fign. 3a und 3b gezeigt, verlaufen die Durchkontaktierungen 21 in einer nicht-hinterspritzten Folienlasche **23** der Leiterbahnfolie 9, die ins Innere der Haube 8 vorsteht oder innseitig an einer hinterspritzten Haubeninnenwand anliegt, also in jedem Fall von der hinterspritzten Haube 8 umgeben ist. Die insgesamt vier Anschlusskontakte 22 sind an der Haubenunterseite, z.B. als freiliegende elektrische Kontaktflächen, innerhalb eines abgeteilten Kontaktbereichs **24** angeordnet.

Das Deckelblech 18 ist aus elektrisch leitendem Material und weist, wie in **Fig. 5** gezeigt, vier U-förmig umgebogene, federnde Laschen **25** mit je zwei Punktvorsprüngen **26** auf, wobei entweder die Laschen 25 selbst oder anderenfalls darauf verlaufende Kontaktstrecken, welche die Punktvorsprünge 26 miteinander elektrisch verbinden, gegeneinander elektrisch isoliert sind. Das Deckelblech 18 ist zwischen dem Kartenlesergehäuse 5 und der Haube 8 angeordnet. Dazu ist das Deckelblech 18, nachdem das Kartenlesergehäuse 5 daran befestigt worden ist, positionsgenau in die Haube 8 eingelegt (**Fig. 6**), wodurch die vier Laschen 25 sich an der Innenseite der Haube 8 abstützen und mit ihren Punktvorsprüngen 26 die freiliegenden elektrischen Kontaktflächen 19 der zweiten Lage 11 elektrisch kontaktieren und dadurch die Abhebeschalter 17 schließen.

Wie in **Fig. 7** gezeigt, sind das Kartenlesergehäuse 5 und die Haube 8 auf eine Leiterplatte **27** positionsgenau mithilfe von Positioniervorsprüngen **28**, **29** des Kartenlesergehäuses 5 und der Haube 8 aufgesetzt, welche in entsprechende Öffnungen der Leiterplatte 27 eingreifen. Die Haube 8 ist über Schrauben, die durch Löcher **30** in den vier Haubenecken gehen, an die Leiterplatte 27 angeschraubt. Beim Aufsetzen der Haube 8 werden die Anschlusskontakte 22 der Haubenunterseite von entsprechenden Gegenkontakten der Leiterplatte 27 elektrisch kontaktiert.

Wenn zu Manipulationszwecken die Haube 8 von außen durchbohrt oder abgeschliffen wird, wird dadurch zwangsläufig ihre Bohrschutz-Leiterbahnstruktur 12 zerstört, über die im Betrieb ein Strom fließt, und folglich wird der bis dahin geschlossene Stromkreis unterbrochen. Dies wird von einer Überwachungseinheit (nicht gezeigt) der Leiterplatte 27 erkannt, die dann keinen Lesevorgang mehr zulässt bzw. die Kontaktiereinheit 6 außer Funktion setzt. Wenn zu Manipulationszwecken die Haube 8 von der Leiterplatte 27 abgehoben wird, wird dadurch zwangsläufig der elektrische Kontakt zwischen den Punktvorsprüngen 26 der Laschen 25 und den elektrischen Kontaktflächen 19 der Haube 8 unterbrochen, also der Abhebeschalter 17 geöffnet und folglich der bis dahin geschlossene Stromkreis unterbrochen. Auch dies wird von der Überwachungseinheit erkannt, die dann keinen Lesevorgang mehr zulässt bzw. die Kontaktiereinheit 6 außer Funktion setzt. Eine unbemerkte Manipulation am Kartenleser 1 ist somit nicht möglich, wodurch ein "sicherer Kartenleser (secure card reader)" bereitgestellt ist.

Anstatt wie bei der gezeigten Ausführungsform die Bohrschutz-Leiterbahnen 13a, 13b und die Abhebeschutz-Leiterbahnen 15, 16 jeweils miteinander in Reihe zu einem gemeinsamen Stromkreis zu schalten, sind bei nicht gezeigten Ausführungsformen die Bohrschutz-Leiterbahnen 13a, 13b und die Abhebeschutz-Leiterbahnen 15, 16 jeweils voneinander separate Stromkreise, die von der Überwachungseinheit separat überwacht werden. Die Bohrschutz-Leiterbahnen 13a, 13b der ersten Lage 10 sind mithilfe der Durchkontaktierungen 21 in Leiterbahnen der zweiten Lage 11 übergeführt und enden dort in eigenen elektrischen Anschlusskontakten 22.

## Patentansprüche

1. Kartenleser (1) zum Datenaustausch mit einer Chipkarte (2), aufweisend ein Kartenlesergehäuse (5) mit einer Karteneinführöffnung (4), eine im Kartenlesergehäuse (5) angeordnete Kontaktiereinheit (6) zum Datenaustausch mit einer durch die Karteneinführöffnung (4) in das Kartenlesergehäuse (5) eingeführten Chipkarte (2) und eine die Kontaktiereinheit (6) bis auf die Karteneinführöffnung (4) abdeckende Haube (8) aus Kunststoff,
**dadurch gekennzeichnet,**
**dass** die Haube (8) innenseitig mit einer mindestens zweilagigen Leiterbahnfolie (9) hinterspritzt ist,
**dass** die der Haube (8) zugewandte, erste Lage (10) eine flächendeckende Bohrschutz-Leiterbahnstruktur (12) mit mindestens einer durchgehenden Bohrschutz-Leiterbahn (13a, 13b) und die der Haube (8) abgewandte, zweite Lage (11) eine Abhebeschutz-Leiterbahnstruktur (14) mit mindestens einer Abhebeschutz-Leiterbahn (15, 16) aufweist,
**dass** die mindestens eine Bohrschutz-Leiterbahn (13a, 13b) über Durchkontaktierungen (21) der Leiterbahnfolie (9) auf die zweite Lage (11) geführt ist und in elektrischen Anschlusskontakten (22) der zweiten Lage (11) endet und dass die mindestens eine Abhebeschutz-Leiterbahn (15, 16) in elektrischen Anschlusskontakten (22) der zweiten Lage (11) endet.

2. Kartenleser nach Anspruch 1, **dadurch gekennzeichnet, dass** die Durchkontaktierungen (21) der Leiterbahnfolie (9) in einer nicht-hinterspritzten Folienlasche (23) der Leiterbahnfolie (9) angeordnet sind.

3. Kartenleser nach Anspruch 1 oder 2, **dadurch gekennzeichnet, dass** die mindestens eine Bohrschutz-Leiterbahn (13a, 13b) eine Linienstärke von höchstens 0,2 mm, insbesondere höchstens 0,15 mm, und einen Linienabstand von höchstens 0,3 mm, insbesondere höchstens 0,2 mm, aufweist.

4. Kartenleser nach einem der vorhergehenden Ansprüche, **dadurch gekennzeichnet, dass** die mindestens eine Abhebeschutz-Leiterbahn (15, 16) mehrere nicht miteinander verbundene Leiterbahnabschnitte (15a-15c, 16a-16c) und mindestens einen Abhebeschalter (17) aufweist, welcher zwei benachbarte, freiliegende elektrische Kontaktflächen (19) aufweist, in denen jeweils zwei Leiterbahnabschnitte enden.

5. Kartenleser nach Anspruch 4, **dadurch gekennzeichnet, dass** die mindestens eine Abhebeschutz-Leiterbahn (15, 16) mehrere in Reihe geschaltete Abhebeschalter (17) aufweist.

6. Kartenleser nach Anspruch 4 oder 5, **dadurch gekennzeichnet, dass** die benachbarten Kontaktflächen (19) durch ein Deckelblech (18) aus zumindest abschnittweise elektrisch leitendem Material miteinander elektrisch verbunden sind.

7. Kartenleser nach Anspruch 6, **dadurch gekennzeichnet, dass** das Deckelblech (18) zwischen dem Kartenlesergehäuse (5) und der Haube (8) angeordnet ist.

8. Kartenleser nach Anspruch 6 oder 7, **dadurch gekennzeichnet, dass** das Deckelblech (18) am Kartenlesergehäuse (5) befestigt ist.

9. Kartenleser nach einem der Ansprüche 6 bis 8, **dadurch gekennzeichnet, dass** das Deckelblech (18) mehrere federnde Laschen (25) aufweist, welche sich an der Innenseite der Haube (8) abstützen und die freiliegenden elektrischen Kontaktflächen (19) des mindestens einen Abhebeschalters (17) miteinander elektrisch verbinden.

10. Kartenleser nach einem der vorhergehenden Ansprüche, **dadurch gekennzeichnet, dass** die Anschlusskontakte (22) an der Unterseite der Haube (8), insbesondere als freiliegende elektrische Kontaktflächen der Leiterbahnen (13a, 13b, 15, 16), angeordnet sind.

11. Kartenleser nach einem der vorhergehenden Ansprüche, **dadurch gekennzeichnet, dass** die mindestens eine Bohrschutz-Leiterbahn (13a, 13b) und die mindestens eine Abhebeschutz-Leiterbahn (15, 16) in Reihe geschaltet sind und einen gemeinsamen Stromkreis bilden.

12. Kartenleser nach einem der Ansprüche 1 bis 10, **dadurch gekennzeichnet, dass** die mindestens eine Bohrschutz-Leiterbahn (13a, 13b) und die mindestens eine Abhebeschutz-Leiterbahn (15, 16) jeweils voneinander separate Stromkreise bilden.

13. Kartenleser nach einem der vorhergehenden Ansprüche, **dadurch gekennzeichnet, dass** der Kartenleser (1) auf einer Leiterplatte (27) montiert ist und die Anschlusskontakte (22) der Haube (8) von entsprechenden Gegenkontakten der Leiterplatte (27) elektrisch kontaktiert sind.

## Claims

1. Card reader (1) for data interchange with a chip card (2), comprising a card reader housing (5) with a card insertion opening (4), a contact unit (6), which is arranged in the card reader housing (5), for data interchange with a chip card (2) which is inserted into the card reader housing (5) through the card insertion opening (4), and a hood (8) which covers the contact unit (6), apart from the card insertion opening (4), and which is composed of plastic, **characterized in that**
the hood (8) is back-moulded on the inner side with an at least two-layered conductor track foil (9),
the first layer (10), which faces the hood (8), has an extensive drill-protection conductor track structure (12) with at least one continuous drill-protection conductor track (13a, 13b), and the second layer (11), which faces away from the hood (8), has a lift-off protection conductor track structure (14) with at least one lift-off-protection conductor track (15, 16), the at least one drill-protection conductor track (13a, 13b) is routed onto the second layer (11) by means of through connections (21) of the conductor track foil (9) and ends in electrical connection contacts (22) of the second layer (11), and
the at least one lift-off-protection conductor track (15, 16) ends in electrical connection contacts (22) of the second layer (11).

2. Card reader according to claim 1, **characterized in that** the through connections (21) of the conductor track foil (9) are arranged in a non-back-moulded foil tab (23) of the conductor track foil (9).

3. Card reader according to claim 1 or 2, **characterized in that** the at least one drill-protection conductor track (13a, 13b) has a line thickness of at most 0.2 mm, in particular at most 0.15 mm, and a line spacing of at most 0.3 mm, in particular at most 0.2 mm.

4. Card reader according to one of the preceding claims, **characterized in that** the at least one lift-off-protection conductor track (15, 16) has a plurality of conductor track sections (15a-15c, 16a-16c), which are not connected to one another, and at least one lift-off switch (17) which has two adjacent exposed electrical contact areas (19) in which in each case two conductor track sections end.

5. Card reader according to claim 4, **characterized in that** the at least one lift-off-protection conductor track (15, 16) has a plurality of lift-off switches (17) which are connected in series.

6. Card reader according to claim 4 or 5, **characterized in that** the adjacent contact areas (19) are electrically connected to one another by a cover panel (18) which is composed of electrically conductive material at least in sections.

7. Card reader according to claim 6, **characterized in that** the cover panel (18) is arranged between the card reader housing (5) and the hood (8).

8. Card reader according to claim 6 or 7, **characterized in that** the cover panel (18) is fastened to the card reader housing (5).

9. Card reader according to one of claims 6 to 8, **characterized in that** the cover panel (18) has a plurality of resilient tabs (25) which are supported on the inner side of the hood (8) and electrically connect the exposed electrical contact areas (19) of the at least one lift-off switch (17) to one another.

10. Card reader according to one of the preceding claims, **characterized in that** the connection contacts (22) are arranged on the bottom side of the hood (8), in particular as exposed electrical contact areas of the conductor tracks (13a, 13b, 15, 16).

11. Card reader according to one of the preceding claims, **characterized in that** the at least one drill-protection conductor track (13a, 13b) and the at least one lift-off-protection conductor track (15, 16) are connected in series and form a common electrical circuit.

12. Card reader according to one of claims 1 to 10, **characterized in that** the at least one drill-protection conductor track (13a, 13b) and the at least one lift-off-protection conductor track (15, 16) each form electrical circuits which are separate from one another.

13. Card reader according to one of the preceding claims, **characterized in that** the card reader (1) is mounted on a printed circuit board (27), and electrical contact is made with the connection contacts (22) of the hood (8) by corresponding mating contacts of the printed circuit board (27).

## Revendications

1. Lecteur de cartes (1) destiné à échanger des données avec une carte à puce (2), présentant un boîtier de lecteur de cartes (5) avec une ouverture d'introduction de carte (4), une unité de contact (6) disposée dans le boîtier de lecteur de cartes (5) pour l'échange de données avec une carte à puce (2) introduite dans le boîtier de lecteur de cartes (5) par l'ouverture d'introduction de carte (4) et un capot (8) en matière plastique recouvrant l'unité de contact (6) à l'exception de l'ouverture d'introduction de carte (4),
**caractérisé en ce**
**que** le capot (8) est surmoulé par injection côté intérieur avec un circuit imprimé flexible (9) à au moins deux couches,
**que** la première couche (10) tournée vers le capot (8) présente une structure de pistes conductrices anti-perçage (12) couvrant toute la surface, comprenant au moins une piste conductrice anti-perçage (13a, 13b) continue, et la deuxième couche (11) éloignée du capot (8) présente une structure de pistes conductrices anti-arrachement (14) comprenant au moins une piste conductrice anti-arrachement (15, 16),
**que** ladite au moins une piste conductrice anti-perçage (13a, 13b) est conduite par des trous métallisés (21) du circuit imprimé flexible (9) sur la deuxième couche (11) et se termine dans des contacts de connexion électrique (22) de la deuxième couche (11) et que ladite au moins une piste conductrice anti-arrachement (15, 16) se termine dans des contacts de connexion électrique (22) de la deuxième couche (11).

2. Lecteur de cartes selon la revendication 1, **caractérisé en ce que** les trous métallisés (21) du circuit imprimé flexible (9) sont disposés dans une languette de film non surmoulée (23) du circuit imprimé flexible (9).

3. Lecteur de cartes selon la revendication 1 ou 2, **caractérisé en ce que** ladite au moins une piste conductrice anti-perçage (13a, 13b) présente une épaisseur de ligne d'au maximum 0,2 mm, en particulier d'au maximum 0,15 mm, et une distance entre lignes d'au maximum 0,3 mm, en particulier d'au maximum 0,2 mm.

4. Lecteur de cartes selon l'une des revendications précédentes, **caractérisé en ce que** ladite au moins une piste conductrice anti-arrachement (15, 16) présente plusieurs segments de piste conductrice (15a-15c, 16a-16c) non reliés entre eux et au moins un commutateur anti-arrachement (17) qui présente deux surfaces de contact électrique adjacentes exposées (19), dans lesquelles se terminent chaque fois deux segments de piste conductrice.

5. Lecteur de cartes selon la revendication 4, **caractérisé en ce que** ladite au moins une piste conductrice anti-arrachement (15, 16) présente plusieurs commutateurs anti-arrachement (17) branchés en série.

6. Lecteur de cartes selon la revendication 4 ou 5, **caractérisé en ce que** les surfaces de contact adjacentes (19) sont reliées entre elles électriquement par une tôle de couverture (18) en matériau électroconducteur au moins sur certaines parties.

7. Lecteur de cartes selon la revendication 6, **caractérisé en ce que** la tôle de couverture (18) est disposée entre le boîtier de lecteur de cartes (5) et le capot (8).

8. Lecteur de cartes selon la revendication 6 ou 7, **caractérisé en ce que** la tôle de couverture (18) est fixée au boîtier de lecteur de cartes (5).

9. Lecteur de cartes selon l'une des revendications 6 à 8, **caractérisé en ce que** la tôle de couverture (18) présente plusieurs languettes élastiques (25) qui s'appuient sur le côté intérieur du capot (8) et relient entre elles électriquement les surfaces de contact électrique exposées (19) dudit au moins un commutateur anti-arrachement (17).

10. Lecteur de cartes selon l'une des revendications précédentes, **caractérisé en ce que** les contacts de connexion (22) sont disposés sur la face inférieure du capot (8), en particulier sous la forme de surfaces de contact électrique exposées des pistes conductrices (13a, 13b, 15, 16).

11. Lecteur de cartes selon l'une des revendications précédentes, **caractérisé en ce que** ladite au moins une piste conductrice anti-perçage (13a, 13b) et ladite au moins une piste conductrice anti-arrachement (15, 16) sont branchées en série et forment un circuit commun.

12. Lecteur de cartes selon l'une des revendications 1 à 10, **caractérisé en ce que** ladite au moins une piste conductrice anti-perçage (13a, 13b) et ladite au moins une piste conductrice anti-arrachement (15, 16) forment des circuits séparés l'un de l'autre.

13. Lecteur de cartes selon l'une des revendications précédentes, **caractérisé en ce que** le lecteur de cartes (1) est monté sur une carte de circuit imprimé (27) et les contacts de connexion (22) du capot (8) sont en contact électrique avec des contacts complémentaires correspondants de la carte de circuit imprimé (27).
